# EUROPÄISCHE PATENTANMELDUNG

(11) **EP 0 876 865 A2**
(43) Veröffentlichungstag der Anmeldung: **11.11.1998**
(21) Anmeldenummer: 98106008.0
(22) Anmeldetag: 02.04.1998
(51) Int. Cl.: B21J 5/12

(54) **Zylinderförmige Metallteile mit Nuten zur Schmierung oder Gasabführung und Verfahren zur Herstellung dieser Teile**

(30) Priorität: 09.04.1997 LU 90048
(71) Anmelder: Gevelot GmbH, 78147 Vöhrenbach (DE)
(72) Erfinder: Oudot, Henri, 75015 Paris (FR)
(74) Vertreter: Kihn, Pierre Emile Joseph

(57) **Zusammenfassung**

Die Erfindung betrifft zylinderförmige Metallteile mit Nuten zur Schmierung oder Gasabführung und Verfahren zur Herstellung dieser Teile.

Das Teil weist mindestens eine auf seiner Oberfläche ausgebildete Spiralnut auf, um die Schmierung oder Gasabführung durch dieses Teil zu ermöglichen.

Bei dem Verfahren zur Herstellung dieses Teils wird ein metallischer Rohling (5) zwischen einem Stempel (9) und einer Matrize (7) extrudiert, wobei die Matrize (7) mit einem Halsstück (13) ausgebildet ist, dessen reduzierter Querschnitt den zylinderförmigen Querschnitt des herzustellenden Teils begrenzt, wobei das Halsstück (13) mindestens eine erste Rippe (21) aufweist, die in Bezug auf die Achse der Anordnung Stempel/Matrize geneigt ist und deren Neigungswinkel den Schneckengang der ausgebildeten Nut definiert.

## Beschreibung

Die Erfindung betrifft die Herstellung zylinderförmiger Metallteile mit Nuten zur Schmierung oder Gasabführung sowie Verfahren zur Herstellung dieser Teile. Es ist bekannt, daß bestimmte zylinderförmige Metallteile mit Nuten versehen werden müssen, um ihre Schmierung oder die Luft- oder Gasabführung durch diese Teile zu ermöglichen.

Beispielsweise weisen Führungssäulen für Scheibenbremsen eines Fahrzeugs Längsnuten oder Abflachungen an der Oberfläche auf, die beim Betrieb der Bremse zur Schmierung und Luftabführung dienen. Die Herstellung dieser Nuten oder Abflachungen, verbunden mit dem Schleifen der Säulenteile, ist relativ kompliziert und kostenaufwendig.

Ein weiteres Beispiel betrifft Führungsgelenkgehäuse. Diese sind in der Regel am unteren Teil mit einer Axialbohrung und am oberen Teil mit einer Radialbohrung versehen, welche mit der Axialbohrung in Verbindung steht und die Luftverbindung zwischen dem eingeschlossenen unteren Teil und dem freiliegenden oberen Teil ermöglicht. Die Herstellung dieser Axial- und Lateralverbindung ist mit Schwierigkeiten und hohen Kosten verbunden.

Der Erfindung liegt die Aufgabe zugrunde, diese Nachteile zu beseitigen, indem am Rand der Teile Spiralnuten gebildet werden, um insbesondere durch diese Nuten eine Schmierungs- oder Luftabführungsfunktion auf den Teilen zu schaffen.

Die Herstellung von Spiralnuten auf den zylinderförmigen Teilen vereinfacht nämlich die Nachbehandlungen dieser Teile, wie z.B. das Flachschleifen bzw. Gewindeschneiden, die auf wirtschaftliche Weise mit Schleifmaschinen vom Typ "centerless" bzw. durch Verformung mit Gewindeschneidmaschinen (mittels Rändelwerkzeugen) durchgeführt werden können, und verleiht darüber hinaus bei eventuellen Wärmebehandlungen eine bessere Festigkeit und geringere Verformbarkeit als eine herkömmliche gerade Nute oder eine Zentrierbohrung.
Die Erfindung betrifft auch Verfahren zur Herstellung von Spiralnuten auf zylinderförmigen Metallteilen, welche Spiralnuten insbesondere für die Schmierung oder Gasabführung durch diese Teile bestimmt sind.

Gemäß einem ersten Verfahren wird ein metallischer Rohling zwischen einem Stempel und einer Matrize extrudiert, wobei die Matrize mit einem Halsstück ausgebildet ist, dessen reduzierter Querschnitt den zylinderförmigen Querschnitt des zu erzeugenden Teils begrenzt, wobei das Halsstück mindestens eine erste Rippe aufweist, die in Bezug auf die Achse der Anordnung Stempel/Matrize geneigt ist und deren Neigungswinkel den Schneckengang der ausgebildeten Nut definiert.

Gemäß einem zweiten Verfahren wird an der Stelle der zu erzeugenden Spiralnut mit Hilfe einer Rändelvorrichtung eine Rollvenformung auf der Zylinderfläche des Teils durchgeführt.

Im folgenden wird die Erfindung anhand von Ausführungsbeispielen und mit Bezug auf die beiliegenden Zeichnungen näher erläutert. Es zeigen :
Figuren 1 und 2 eine Führungssäule mit einer erfindungsgemäßen Spiralnut in Vorder- bzw. Schnittansicht längs der Linie A-A der Figur 1,
Figuren 3 bis 6 im Axialschnitt dargestellte Teilansichten der verschiedenen Phasen des Verfahrens zur Herstellung einer erfindungsgemäßen Führungssäule,
Figuren 7 und 8 im Axialschnitt dargestellte Teilansichten eines Führungsgelenkgehäuses eines Fahrzeugs, und zwar eines herkömmlichen und eines erfindungsgemäßen Gehäuses,
Figuren 9 und 10 im Axialschnitt dargestellte Teilansichten der verschiedenen Phasen des Verfahrens zur Herstellung des enfindungsgemäßen Gelenkgehäuses der Figur 8, und
Figuren 11 und 12 einen nach einem weiteren Ausführungsbeispiel der Erfindung gebildeten Achszapfen.

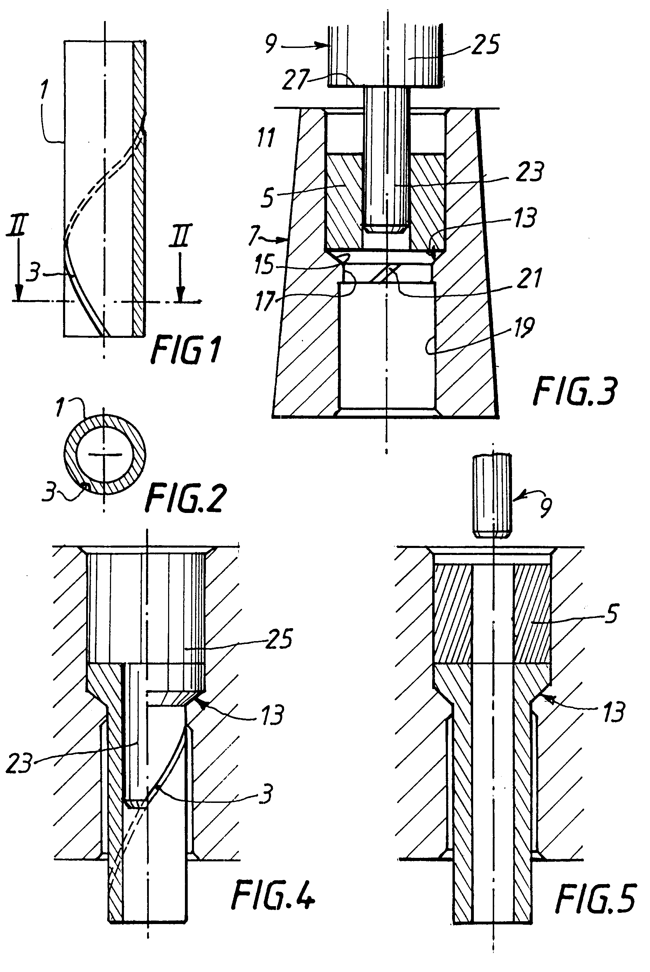

In Figur 1 und 2 ist eine Säule 1 zur Führung des Scheibenbremssattels eines Fahrzeugs dargestellt. Diese Säule 1 weist auf ihrer Zylinderfläche eine Spiralnut 3 auf, die insbesondere die Schmierung der Führung bei Bewegung des Sattels ermöglicht. Diese über ihre Länge gleichmäßig und dünn ausgebildete Nute 3 erstreckt sich über die gesamte Länge der Säule. Dabei ist anzumerken, daß eine solche Nut eine herkömmliche, entlang einer Mantellinie der Zylinderfläche der Säule ausgebildete geradlinige Nut ersetzt ; allerdings wird durch eine geradlinige Nut, wie bereits vorstehend erwähnt, das Schleifen der Zylinderfläche der Säule beträchtlich erschwert. Dies ist bei einer Spiralnut, die das Schleifen der Oberfläche mit Schleifmaschinen vom Typ "centerless" zuläßt, bei denen die Teile wirtschaftlich durch Durchlauf- oder Einstechschleifen behandelt werden, nicht der Fall. Diese Art von Behandlung ist bei einer geradlinigen Nut oder bei Abflachungen auf der Oberfläche, die die gleiche Schmier- und Gasabführungsfunktion gewährleisten, unmöglich.

Ein Verfahren zur Herstellung einer erfindungsgemäßen Führungssäule 1 ist in Figur 3 bis 6 dargestellt. Ein metallischer Rohling 5 (aus weichem Stahl oder aus Metall-Legierungen mit niederprozentigem Kohlenstoffgehalt) wird in einer Anordnung bestehend aus einer Matrize 7 und einem oberen Stempel 9 kalt oder "halbwarm" stranggepreßt. Der Stempel 9 wird mit einer Presse und bei Hochdruck axial in die Matrize 7 und auf den Rohling 5 gepreßt.

Die Matrize 7 enthält achsensymmetrisch ein oberes zylinderförmiges Innenstück 11 größeren Durchmessers, in dem der zu behandelnde Rohling 5 in der Ausgangsphase (Figur 3) aufgenommen wird, ein darunter liegendes zylinderförmiges Halsstück 13 mit einem konischen Bereich 15, dessen Querschnitt nach unten reduziert ist und der mit einem unteren zylinderförmigen Bereich 17 kleineren Querschnitts entsprechend dem definitiven Durchmesser der zu bildenden Säule verbunden ist, und ein unteres zylinderförmiges langgestrecktes Stück 19 mit einem geringfügig größeren Durchmesser als das zylinderförmige Halsstück 13, in dem der untere Teil der gebildeten Säule mit Spiel aufgenommen wird.

Der konische Bereich 15 und der angrenzende zylinderförmige Bereich 17 besitzen eine geringe Länge. Sie tragen zum Strangpressen und Kalibrieren des Materials bei, das unter dem Druck des Stempels durch diese Bereiche gepreßt wird. Der zylinderförmige Bereich 17 weist je nach Anzahl der auf der Säulenfläche auszubildenden Nuten eine Rippe 21 auf (oder mehrere), die überstehend ausgebildet und in Bezug auf die Matrizenachse geneigt ist. Der Querschnitt dieser Rippe 21 definiert den Querschnitt der auf der Säule zu erzeugenden Nut 3.

Der ebenfalls achsensymmetrisch gestaltete Stempel 9 besteht aus einem langgestreckten zylinderförmigen unteren Stück 23, dessen Durchmesser reduziert ist und der den Innendurchmesser der zu bildenden Säule 1 begrenzt, und einem als Ansatz des unteren Stückes 23 ausgebildeten oberen Stück 25 größeren Durchmessers als Ergänzung zum oberen zylinderförmigen Innenstück 11 der Matrize.

Das Verfahren zur Herstellung der Säule ist wie folgt.

Der Rohling 5 wird in die Matrize 7 (Figur 3) eingeführt, dann wird der Stempel 9 betätigt und in die Matrize 7 heruntergelassen. Der Rohling 5 wird direkt durch das Ansatzstück 27 des Stempels in der Matrize komprimiert, und das komprimierte Material wird durch das langgestreckte zylinderförmige untere Stück 23 des Stempels und das Halsstück 13 der Matrize nach unten gepreßt. Während des Pressens folgt das Material der Rippe 21 am Halsstück 13, wobei es beim Passieren des Halses von dieser in Drehbewegung versetzt wird, um auf der gepreßten Zylinderfläche eine regelmäßige Spiralnut 3 zu bilden.

Es wird darauf hingewiesen, daß Stempel 9 und Matrize 7 zwecks Reduzierung der Drehspannungen auf beiden Seiten des Halsstückes 13 auf Axialkugellager montiert werden können, wobei sich Stempel und Matrize relativ zueinander drehen können.

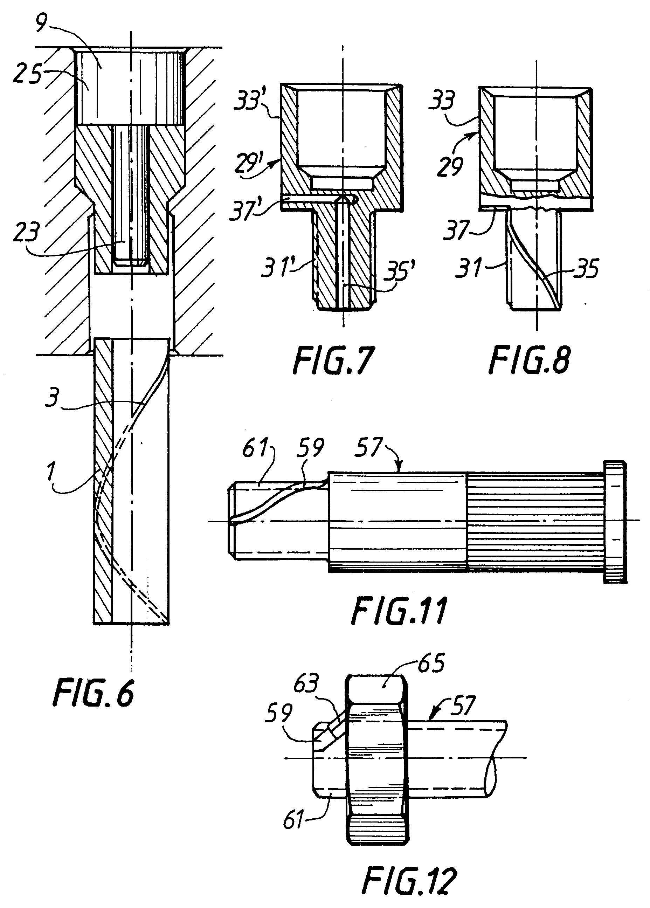

Der Stempel 9 wird so lange vorgetrieben, bis eine untere Endstellung (Figur 4) erreicht ist, in der der Rohling nicht vollständig stranggepreßt ist, da ein Teil davon oberhalb des Halsstückes 13 der Matrize verbleibt. Danach wird der Stempel in eine obere Stellung befördert, in der ein zweiter Rohling 5 (mit dem ersten identisch) in die Matrize eingeführt wird. Danach wird ein zweiter Stempelabsenkzyklus durchgeführt (Figur 6), wobei das Material des zweiten Rohlings das Material des ersten durch das Halsstück 13 der Matrize treibt. Sobald dieses vollständig stranggepreßt ist, wird durch das nachfolgende Aufpressen des Stempels das Strangpressen des zweiten Rohlings zur Bildung einer zweiten Führungssäule 1 (mit der ersten identisch) bewirkt. Da die erste Führungssäule fertiggestellt ist, kommt sie heraus und fällt vom unteren Teil der Matrize herunter.

Das vorgenannte Verfahren kann auf gleiche Weise auf die Herstellung von gefüllten Säulen ohne Bohrung angewandt werden.

Durch die Erfindung können auch kostengünstig Führungsgelenkgehäuse 29 hergestellt werden (Figur 8). Diese Gelenkgehäuse 29 bestehen aus einem unteren Teil 31, der in einem dichten Schutzbalg (nicht dargestellt) eingeschlossen ist, und einem freiliegenden oberen Teil 33. Der untere Teil 31 ist mit einem Gewinde versehen und weist auf seiner Oberfläche eine Spiralnut 35 auf, welche mit einer geraden Nut 37, die in etwa die gleiche Tiefe besitzt und radial auf dem oberen Teil 33 ausgebildet ist, verbunden ist. Durch diese Nuten kann insbesondere Luft, die an der Rückseite des unteren Teils 31 des Gehäuses eingeschlossen ist, zu der um den oberen Teil 33 laufenden Nut abgeführt werden oder umgekehrt Luft angesaugt werden.

Herkömmliche Gelenkgehäuse 29' (Figur 7) weisen im unteren Teil eine Axialbohrung 35' auf, die mit einer Radialbohrung 37' am oberen Teil verbunden ist. Die Herstellung dieser Bohrungen ist kompliziert und kostenaufwendig.

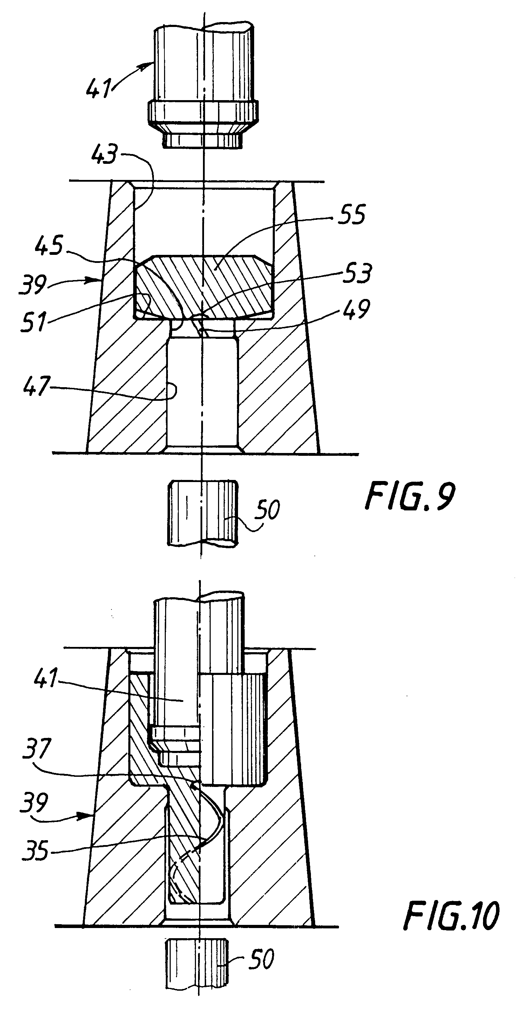

Die Herstellung der enfindungsgemäßen Gelenkgehäuse ist in Figur 9 und 10 dargestellt. Dabei wird das Teil, das entsprechend dem vorgenannten Verfahren zur Herstellung einer Führungssäule ausgebildet ist, durch Strangpressen erzeugt und weist nach abgeschlossenem Strangpressen des Materials die oben angegebene Spiralnut 35 und Radialnut 37 auf. Dabei wird wie zuvor eine Anordnung aus einer unteren Matrize 39 und einem oberen Stempel 41 verwendet, die axial miteinander kooperieren. Die Matrize 39 enthält ein oberes zylinderförmiges Innenstück 43 größeren Durchmessers, welches den definitiven Außenumfang des oberen Teils 33 des Gelenkgehäuses definiert, ein darunter liegendes Halsstück 45 zylinderförmiger Gestalt und kleineren Durchmessers, welches den Durchmesser des unteren Teils 31 des Gelenkgehäuses definiert, und ein zylinderförmiges Innenstück 47 mit einem etwas größeren Durchmesser als das Halsstück 45, das den unteren Teil 31 des gebildeten Gehäuses aufnimmt. Das Halsstück 45 weist eine innere Rippe 49 auf, die in Bezug auf die Achse der Anordnung geneigt ist und deren Querschnitt den Querschnitt der Spiralnut 35 definiert, die auf dem unteren Teil erzeugt werden soll. Der Neigungswinkel der Rippe 49 definiert die Schneckengang der gebildeten Nute 35. Auf der Basis 51 des oberen zylinderförmigen Stückes 43 der Matrize ist eine zweite Rippe 53 ausgebildet, die zur ersten quer verläuft. Diese Rippe 53 erstreckt sich von der ersten Rippe 49 aus über die Länge der Basis 51 des oberen zylinderförmigen Stückes der Matrize. Der Querschnitt dieser Rippe definiert den Querschnitt der nach dem Extrudieren gebildeten Radialnut 37.

Je nach Anzahl der Nutenanordnungen, die auf dem Gelenkgehäuse gebildet werden sollen, kann die Matrize selbstverständlich eine oder mehrere Anordnungen bestehend aus einer ersten und zweiten Rippe aufweisen.

Der Stempel 41 ist einstückig ausgebildet und definiert die zylinderförmige Gestalt innen im oberen Teil 33 des herzustellenden Gelenkgehäuses.

Das Herstellungsverfahren entspricht dem für die Führungssäule beschriebenen Verfahren.

Ausgehend von Figur 9, wo sich der Stempel 41 in hochgefahrener Stellung befindet, wird der zu behandelnde Rohling 55 in die Matrize 39 eingeführt und der Stempel dann axial gesenkt und auf den Rohling 55 und in die Matrize gepreßt. Das Material des Rohlings verformt sich und wird stranggepreßt und dabei nach oben in das obere zylinderförmige Stück 43 der Matrize befördert und nach unten durch das Halsstück 45 entlang der Rippen 49, 53 gepreßt. Der Stempel senkt sich, bis er eine untere Endstellung (Figur 10) erreicht, in der das Gehäuseteil fertiggestellt ist. Danach braucht der Stempel nur noch hochgefahren und das fertiggestellte Teil entfernt zu werden, was über einen unteren Auswerter 50 erfolgt. Dann kann ein neuer Zyklus zur Herstellung eines neuen Teils beginnen. Es bleibt nur noch das Gewinde am unteren Teil 31 des Gehäuses herzustellen, was auf einfache Weise durch Gewindeverformung, Gewindewalzen mittels einer Rändelvorrichtung realisiert werden kann. Es wird hier ersichtlich, daß die Herstellung der Nuten keinen Einfluß auf die Herstellungskosten hat.

Durchführungsvarianten sind im Rahmen der Erfindung durchaus vorstellbar. So kann die Erfindung beispielsweise auf Achszapfen 57 zur Anwendung kommen, wobei durch die Herstellung einer Spiralnute 59 bestimmter Tiefe (Figur 11) auf dem Gewindeteil 61 des Zapfens der Bund 63 der Zapfenstellmutter 65 in dieser Nut 59 abgesenkt (Figur 12) und dadurch der feste Sitz der Mutter auf dem Zapfen verriegelt werden kann. Wie bei den vorgenannten Verfahren kann die Spiralnut durch Extrudieren und das Gewinde durch Verformung hergestellt werden.

Selbstverständlich können auch spiralförmige Abflachungen auf der Oberfläche in ähnlicher Weise wie die Spiralnuten hergestellt werden.

## Patentansprüche

1. Zylinderförmiges Metallteil (1, 29, 57), dadurch gekennzeichnet, daß es mindestens eine auf seiner Oberfläche ausgebildete Spiralnut (3, 35, 59) aufweist, wobei die Nut (3, 35, 59) insbesondere dazu bestimmt ist, die Schmierung oder Gasabführung durch dieses Teil zu ermöglichen.

2. Verfahren zur Herstellung eines Metallteils (1, 29, 57) gemäß Definition in Anspruch 1, dadurch gekennzeichnet, daß ein metallischer Rohling (5, 55) zwischen einem Stempel (9, 41) und einer Matrize (7, 39) extrudiert wird, wobei die Matrize mit einem Halsstück (13, 45) ausgebildet ist, dessen reduzierter Querschnitt den zylinderförmigen Querschnitt des herzustellenden Teils begrenzt, wobei das Halsstück (13, 45) mindestens eine erste Rippe (21, 49) aufweist, die in Bezug auf die Achse der Anordnung Stempel/Matrize geneigt ist und deren Neigungswinkel den Schneckengang der ausgebildeten Nut (3, 35) definiert.

3. Verfahren zur Herstellung eines Metallteils (29) nach Anspruch 2, dadurch gekennzeichnet, daß in der Matrize (39) mindestens eine zweite Rippe (53) ausgebildet ist, die mit der ersten Rippe (49) verbunden ist, um durch die auf dem Teil hergestellte erste und zweite Nut (35, 37) die Gasverbindung innerhalb des herzustellenden Teils zu ermöglichen.

4. Verfahren zur Herstellung eines Metallteils nach einem der Ansprüche 2, 3, dadurch gekennzeichnet, daß der Stempel (9, 41) und die Matrize (7, 39) auf ein Axialkugellager montiert sind.

5. Verfahren zur Herstellung eines Metallteils gemäß Definition in Anspruch 1, dadurch gekennzeichnet, daß an der Stelle der zu erzeugenden Spiralnut eine Rollverformung des Teils durchgeführt wird, beispielsweise mit Hilfe einer Rändelvorrichtung.

6. Führungssäule, welche durch die Durchführung des Verfahrens nach einem der Ansprüche 2 bis 5 erhalten wird, dadurch gekennzeichnet, daß sie eine Spiralnut (3) geringer Tiefe aufweist, die auf der gesamten Länge ihrer Zylinderfläche ausgebildet ist.

7. Führungsgelenkgehäuse (29), welches durch die Durchführung des Verfahrens nach Anspruch 3 erhalten wird, dadurch gekennzeichnet, daß es eine erste Spiralnut (35) auf seinem unteren Teil (31) und eine auf seinem oberen Teil (33) ausgebildete zweite Radialnut (37) aufweist, wobei die Nuten (35, 37) miteinander verbunden sind.

8. Achszapfen (57), welcher durch die Durchführung des Verfahrens nach einem der Ansprüche 2 bis 5 erhalten wird, dadurch gekennzeichnet, daß er auf seinem Gewindeteil (61), welcher zur Aufnahme der Zapfenstellmutter (65) bestimmt ist, eine Spiralnut (59) aufweist, durch die der feste Sitz der Mutter auf dem Zapfen durch Absenken ihres Sicherheitsbundes (63) in die Nut (59) verriegelt werden kann.
